# EUROPEAN PATENT APPLICATION

(11) **EP 4 647 369 A1**
(43) Date of publication of application: **12.11.2025**
(21) Application number: 23917608.4
(22) Date of filing: 06.10.2023
(51) Int. Cl.: B65G 1/04

(54) **AUTOMATED WAREHOUSE**

(30) Priority: 20.01.2023 JP 2023007423
(71) Applicant: Murata Machinery, Ltd., Kyoto-shi, Kyoto 601-8326 (JP)
(72) Inventor: TSUJI, Yuji, Kyoto-shi, Kyoto 612-8686 (JP)
(74) Representative: Stöckeler, Ferdinand
(86) International application number: PCT/JP2023/036521
(87) International publication number: WO 2024/154396

(57) **Abstract**

There is provided an automated warehouse that is capable of storing a plurality of types of packages with different package widths in a depth direction of a rack, and can efficiently store a package at a storage position on a front side of the rack. An automated warehouse 1 of the present invention includes a rack 2, a loading/unloading carriage 4 having a transfer device 12, and controllers 22 and 50, the transfer device 12 includes arms 32, 34, 36, and 38, front and rear end hooks 46, and an intermediate hook 48, and the controller 22 or 50, when transferring a package to a storage position S on a front side, transfers the package by a hold change operation of a package A1, B1 by the rear end hook 46 and the intermediate hook 48 in a case where a package width W1 of a package A2, B2 on a back side is larger than a package width of the package A1, B1 to be transferred onto the front side, and transfers the package by the rear end hook 46 without hook change operation in a case where the package width of the package on the back side is smaller than or the same as a package width of the package to be transferred onto the front side.

## Description

### Technical Field

The present invention relates to an automated warehouse, and particularly relates to an automated warehouse including a rack capable of storing a plurality of packages in a depth direction, a loading/unloading carriage that travels along the rack and has a transfer device that transfers a package onto the above-described rack, and a controller.

### Background Art

Conventionally, a rear hook transfer device including side arms and hooks for transferring packages is known. For example, Patent Literature 1 discloses a transfer device that is provided with openable and closable hooks at both front and rear ends of a pair of left and right side arms that are extendable and contractible, and discharges a package onto a rack by advancing the arms with the hooks on the rear end side in a protruded state.

Furthermore, Patent Literature 2 discloses an art in which a sensor that is formed of an infrared sensor, a visible light sensor or the like and that detects presence or absence of an object (package) is provided in the transfer device, and this sensor performs gap detection as to whether or not a portion where the side arms of the transfer device enter can be secured on the rack side onto which a package is to be discharged.

### Citation List

### Patent Literature

Patent Literature 1: Republished Patent Publication WO2012/029339
Patent Literature 2: Japanese Patent Laid-Open No. 2019-104588

### Summary of Invention

### Technical Problem

Here, in the automated warehouse, when a plurality of packages are stored (discharged) from the rear hook type transfer device onto the rack in the depth direction, after a predetermined extending and contracting amount of the side arms is secured, a plurality of packages with different package widths may be stored in the depth direction of the rack by performing a hook change operation between the hooks provided at the front and rear ends of the side arms and intermediate hooks provided between them. In such a case, in particular, there is a demand to improve a cycle time required for discharging the package to the placement position on the front side of the rack at the time of storing the package.

Thus, the present invention has been made to solve the aforementioned problem and has an object to provide an automated warehouse that can efficiently store packages at storage positions on a front side of a rack in the automated warehouse that can store a plurality of types of packages with different package widths in a depth direction of the rack.

### Solution to Problem

In order to achieve the above-described object, the present invention is an automated warehouse including a rack capable of storing a plurality of packages in a depth direction, a loading/unloading carriage that travels along the rack and has a transfer device that transfers a package into the rack, and a controller, wherein the transfer device includes an arm that advances and retreats with respect to the rack, a front end hook provided at a front end of the arm, a rear end hook provided at a rear end of the arm, and at least one intermediate hook provided at an intermediate position of the arm, the controller is configured to, when a package is stored at a storage position on a back side, and a package is to be stored at a storage position on a front side of the storage position on the back side, retreat the arm after pushing out the package by a predetermined distance by the rear end hook and further transfer the package to the storage position on the front side by the intermediate hook to store the package at the storage position on the front side, in a case in which a package width of the package at the storage position on the back side is larger than a package width of the package to be transferred to the storage position on the front side, and transfer the package to the storage position on the front side by the rear end hook to store the package at the storage position on the front side, in a case in which the package width of the package at the storage position on the back side is smaller than or the same as the package width of the package to be transferred to the storage position on the front side.

According to the present invention configured as above, in the case in which the package width of the package that is stored on the back side is smaller than the package width of the package to be stored on the front side, hook change operation can be omitted, and thereby transfer time can be shortened. Accordingly, a plurality of kinds of packages with different package widths can be efficiently stored at the storage positions on the front side of the rack.

Furthermore, in the present invention, it is preferable that the loading/unloading carriage includes a scanning sensor that scans and detects a package width of a package stored in the rack by movement of the loading/unloading carriage, and the controller is configured to calculate the package width of the package at the storage position on the back side based on a moving distance while the scanning sensor is detecting the package during movement at a time when the loading/unloading carriage stores the package.

According to the present invention configured as above, since the package width of the package is calculated while the loading/unloading carriage is moving to store the package, the actual package width and position of the package can be confirmed without needing extra time for measuring the package width,

Furthermore, in the present invention, it is preferable that the loading/unloading carriage includes a sensor that detects a package width of a package that is placed on the transfer device and is being conveyed, and the controller is configured to memorize a detection result of the package width detected by the sensor, of the package, when the package which is conveyed is stored at the storage position on the back side.

According to the present invention configured as above, based on the memorized package width of the package at the storage position on the back side, the memorized information can be used when storing the package at the storage position on the front side, after that. Furthermore, measurement operation of the package width during movement of the loading/unloading carriage can be made unnecessary.

Furthermore, in the present invention, it is preferable that the controller is configured to detect, by the scanning sensor, a deviation amount in a package width direction from a predetermined position, of the package stored at the storage position on the back side, together with the package width of the package at the storage position on the back side.

According to the present invention configured as above, it is possible to determine the necessity of the change operation by taking into account the positional deviation amount of the package in addition to the package width of the package at the storage position on the back side. For example, when the deviation amount from the predetermined position, of the package on the back side is equal to or larger than a specified amount, and the package cannot be stored properly to the storage position on the front side, it is possible to determine to perform the hook change operation in order to avoid the possibility of the arm interfering with the package on the back side.

Furthermore, in the present invention, it is preferable that the controller is configured to retreat the arm after pushing out the package by a predetermined distance by the rear end hook and further transfer the package to the storage position on the front side by the intermediate hook to store the package at the storage position on the front side, in a case in which the detected deviation amount in the package width direction from the predetermined position, of the package that is stored at the storage position on the back side exceeds a predetermined allowable deviation amount.

According to the present invention configured as above, when the deviation amount from the predetermined position of the package stored on the back side exceeds the predetermined allowable deviation amount that is previously set, the hook change operation is performed, and therefore the arm can avoid interference with the package on the back side.

### Advantageous Effect of Invention

According to the present invention, in the automated warehouse capable of storing a plurality of types of packages with different package widths in the depth direction of the rack, the packages can be stored efficiently at the storage positions on the front side of the rack.

### Brief Description of Drawings

[Figure 1] Figure 1 is a front view showing a schematic configuration of an automated warehouse according to an embodiment of the present invention.
[Figure 2] Figure 2 is a plan view showing a schematic configuration of the automated warehouse according to the embodiment of the present invention.
[Figure 3] Figure 3 is a perspective view showing schematic configurations of a loading/unloading carriage and a transfer device thereof of the automated warehouse according to the present embodiment.
[Figure 4] Figure 4 is a block diagram showing a schematic configuration of a control system of the transfer device included by the loading/unloading carriage of the present embodiment.
[Figure 5] Figure 5 is a schematic view showing a transfer pattern according to the transfer device of the present embodiment and is a view showing a rack in which placement positions for two large packages are defined in the depth direction, and a shuttle passage.
[Figure 6] Figure 6 is a schematic view showing an operation pattern of the transfer device when transferring a large package to a placement position on the front side, in the rack on which packages with two kinds or more of package widths are stored, and the placement positions for two large packages are defined in the depth direction.
[Figure 7] Figure 7 is a schematic view showing a transfer pattern according to the transfer device of the present embodiment, and is a view showing a rack in which placement positions for three small packages are defined in a depth direction, and a shuttle passage.
[Figure 8] Figure 8 is a schematic view showing a transfer pattern according to a modification of the present embodiment.
[Figure 9] Figure 9 is a schematic view for explaining operations of the loading/unloading carriage and the transfer device when transferring a package to a placement position on the front side of the rack of the automated warehouse according to the present embodiment, Figure 9 (A) and Figure 9 (B) each shows movement of the loading/unloading carriage that measures a package width of a package on the back side of the rack, and Figure 9 (C) is a view showing a state in which the transfer device transfers a package to a storage position on the front side.
[Figure 10] Figure 10 is a schematic view of a transfer device for explaining a detection operation of a package width that is executed during transfer of a package to be stored on a rack, according to a modification of the present embodiment.

### Description of Embodiment

Next, with reference to the accompanying drawings, an automated warehouse according to an embodiment of the present invention will be described.

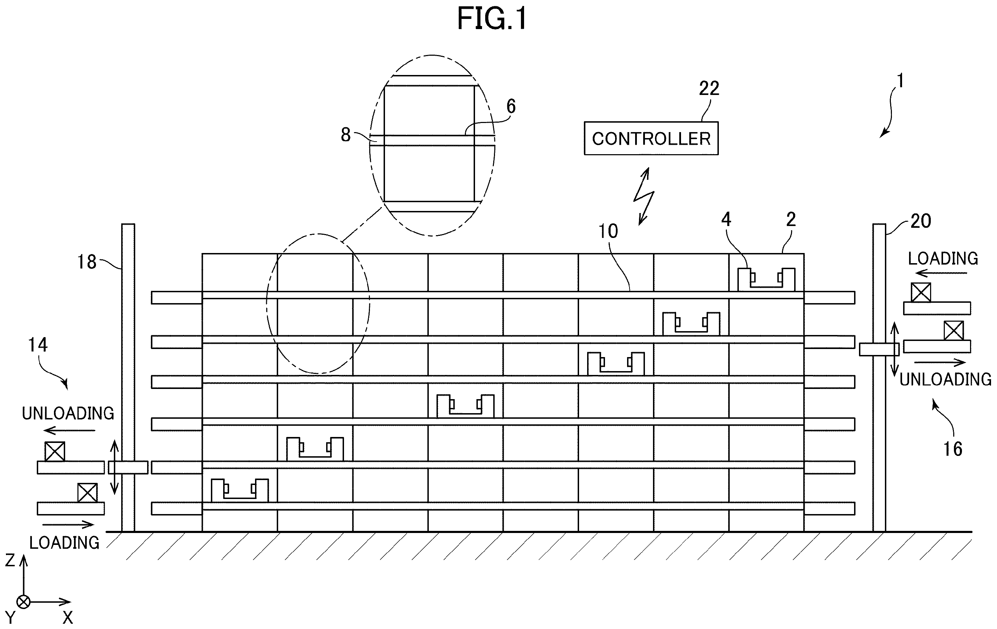

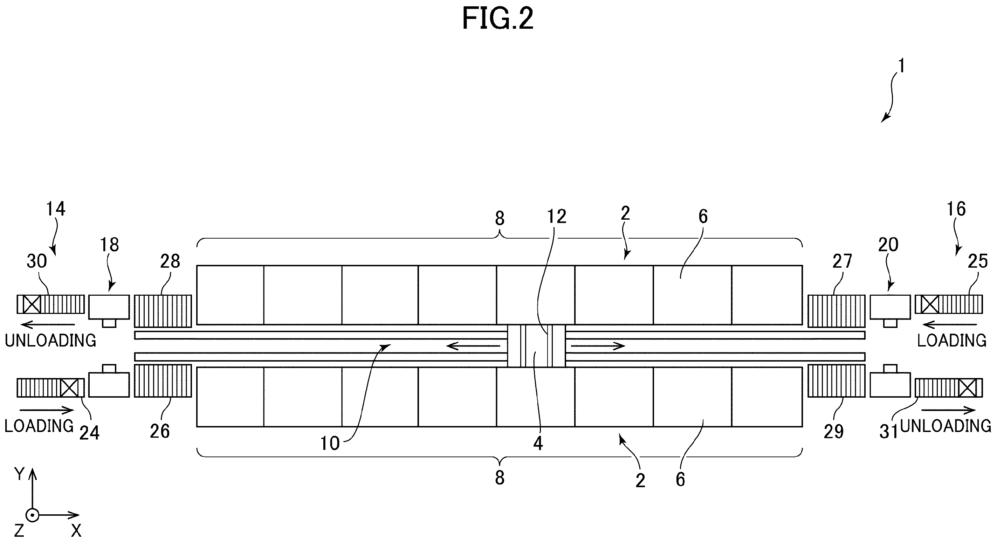

First, based on Figure 1 and Figure 2, a schematic configuration of the automated warehouse according to the embodiment of the present invention will be described. Figure 1 is a front view showing a schematic configuration of the automated warehouse according to the present invention, and Figure 2 is a plan view showing the schematic configuration of the automated warehouse according to the embodiment of the present invention.

As shown in Figure 1 and Figure 2, reference sign 1 denotes the automated warehouse of the present embodiment (hereinafter, referred to as "automated warehouse"). In the present embodiment, the automated warehouse 1 is a shuttle type automated warehouse including a plurality of loading/unloading carriages 4 each having a transfer device 12.

Furthermore, as a modification of the present embodiment, the automated warehouse 1 may be a well-known stacker crane type automated warehouse. In that case, an operation of the loading/unloading carriage 4, a transfer operation of the transfer device 12 of the loading/unloading carriage 4, and the like that will be described later can be applied in correspondence to an operation of a stacker crane, a transfer operation of the transfer device provided in the stacker crane (not illustrated), and the like.

The automated warehouse 1 of the present embodiment includes a rack 2, and a plurality of loading/unloading carriages (hereinafter, referred to as "carriages") 4.

The rack 2 includes a plurality of shelf stages 8 having a series of shelves 6 aligned in a left-right direction (X-direction shown in the drawing) in an up-down direction (Z-direction shown in the drawing). Note that the plurality of shelves 6 may be respectively separate bodies or may be integrally formed.

Next, as shown in Figure 2, the plurality of carriages 4 respectively move in the left-right direction along a traveling path 10 having a pair of rails independently from one another, and perform delivery of packages with respect to the rack 2, that is, package discharge (transfer) onto the rack 2 and package lading onto the carriages 4 from the rack 2 by the transfer device 12 described later. The plurality of carriages 4 are disposed on the plurality of shelf stages 8 one by one. As shown in Figure 2, the rack 2 has a pair of racks 2 that face each other with the traveling path 10 for the carriage 4 therebetween.

Note that a modification of the automated warehouse 1 of the present embodiment may be, for example, an automated warehouse 1 in which one loading/unloading carriage with a lifter is arranged for every three shelf stages 8, and the one carriage can store packages on the shelf stages 8 in three tiers respectively.

Next, as shown in Figure 1 and Figure 2, the automated warehouse 1 includes, on both sides thereof, first and second stations 14 and 16 for receiving packages to be stored in the rack 2 and receiving packages that are taken out of the rack 2. In the present embodiment, the first station 14 is disposed at a position in the up-down direction corresponding to the shelf stage 8 on a lowermost tier, and the second station 16 is disposed at a position in the up-down direction corresponding to the shelf stage 8 on an uppermost tier.

Furthermore, the automated warehouse 1 includes first and second raising/lowering devices 18 and 20 that raise and lower packages. The first and second raising/lowering devices 18 and 20 mediate delivery of packages between the first and second stations 14 and 16 and the carriage 4, respectively.

The automated warehouse 1 includes a controller 22 that controls operations of these carriages 4 and the like. The carriages 4 and the like operate according to a control signal transmitted from the controller 22 by wireless communication or wired communication.

Here, a basic loading/unloading operation of packages of the automated warehouse 1 by the controller 22 will be described.

First, as loading work of a package, a package that is transferred by a loading conveyor 24 of the first station 14 is placed on a loading placement region 26 at a height position corresponding to the shelf stage 8 to be loaded by the first raising/lowering device 18. The package placed in the loading placement region 26 is received by the carriage 4 of the corresponding shelf stage 8 and is conveyed (discharged) to any of the shelves 6 on the shelf stage 8.

Next, as unloading work of a package, the package that is placed on any of the shelves 6 of the shelf stage 8 that is loaded is laden on the carriage 4 of the corresponding shelf stage 8 and is conveyed to an unloading placement region 28 at a height position corresponding to this shelf stage 8. The package that is conveyed to the unloading placement region 28 is moved to an unloading conveyor 30 via the first raising/lowering device 18 and is further conveyed to a conveyance destination connected to the unloading conveyor 30.

The second station 16 is similar to the first station 14, and includes a loading conveyor 25, a loading placement region 27, an unloading placement region 29 and an unloading conveyor 31, and the aforementioned loading/unloading operation is performed. Furthermore, the loading work and the unloading work via one of the first station 14 and the second station 16 can be executed independently from the loading work and the unloading work via the other one.

Note that in a stacker crane type automated warehouse according to a modification, instead of the plurality of carriages 4 and the raising/lowering devices 18 and 20 that are mentioned above, one stacker crane not illustrated operates according to a control signal transmitted from the controller 22, and a transfer device provided in the stacker crane transfers packages to a plurality of storage positions of the rack 2.

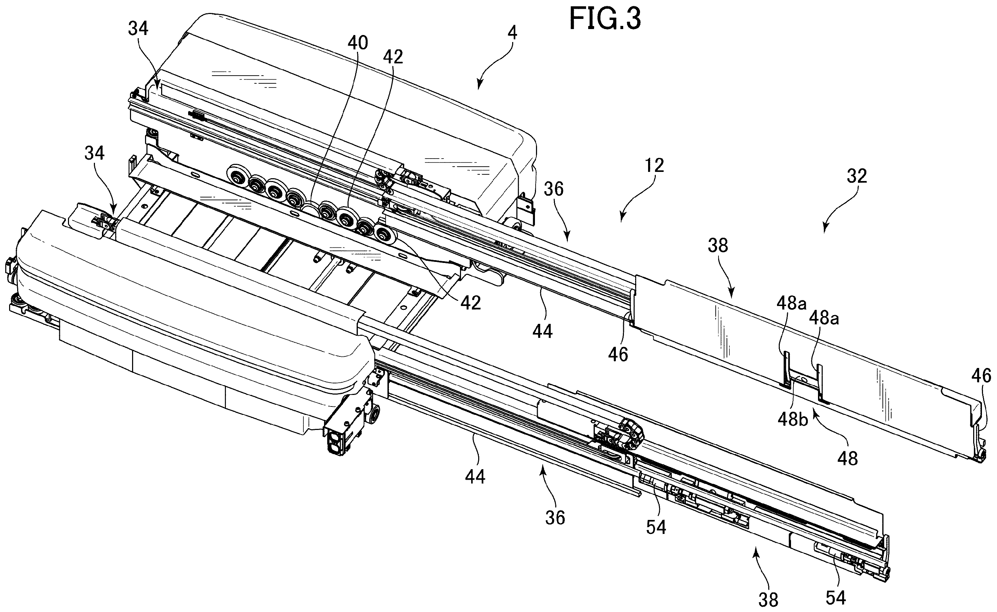

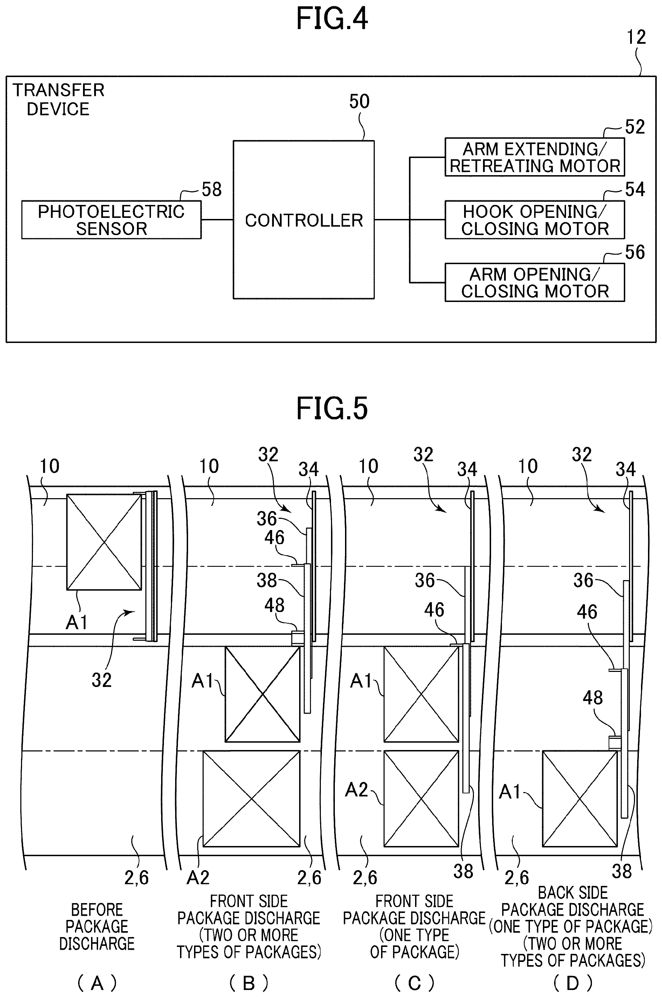

Next, based on Figure 3 and Figure 4, schematic configurations of the loading/unloading carriage and the transfer device thereof of the automated warehouse of the present embodiment will be described. Figure 3 is a perspective view showing the schematic configurations of the loading/unloading carriage and the transfer device thereof of the automated warehouse according to the present embodiment, and Figure 4 is a block diagram showing a schematic configuration of a control system of the transfer device included by the loading/unloading carriage of the present embodiment.

First, as shown in Figure 3, the carriage 4 includes the transfer device 12. The transfer device 12 includes a pair of side arms 32, and takes in (loads) and sends out (discharges) a package by these side arms 32 extending and contracting in a front-rear direction (Y-direction shown in Figure 1, and Figure 2).

The pair of side arms 32 each has a base arm 34, a middle arm 36 coupled to the base arm 34, and a top arm 38 coupled to the middle arm 36. Since configurations of the respective arms 34, 36, and 38 of the pair of side arms 32 are the same as each other on the left and right, one arm will be described below.

Although description will be omitted below, the stacker crane according to the modification has a similar configuration to the transfer device 12 of the present embodiment, or is provided with a transfer device capable of similar operation.

The base arm 34 is fixed to the carriage 4. A spline shaft 40 extends through a central portion of the base arm 34 in the left-right direction (X-direction shown in Figures 1 and 2), and this spline shaft 40 is rotationally driven by a motor (arm extending/retreating motor 52 shown in Figure 4) built in the carriage 4.

In each of front and rear of the spline shaft 40, four pinion gears 42 arranged side by side are disposed to mesh with each other, and a rack gear 44 of the middle arm 36 is disposed to mesh with these pinion gears 42.

Furthermore, though not illustrated, pulleys are respectively provided at both ends in the front-rear direction of the middle arm 36, and a belt is passed on these pulleys crosswise, and is fixed to both ends in the front-rear direction of the top arm 38.

In the present embodiment, when the spline shaft 40 is rotated in a predetermined direction, the respective pinion gears 42 that are driven rotate, and the rack gear 44 receiving the rotation moves in either one of the front and rear directions mainly by these configurations, whereby the middle arm 36 extends or contracts with respect to the base arm 34. Furthermore, as a result of the middle arm 36 extending and contracting, the top arm 38 extends and contracts twice as much as the middle arm 36 by the action of the belt that is passed on the pulleys crosswise. In this way, the top arm 38 extends and contracts in conjunction with extension and contraction of the middle arm 36.

Note that in the present embodiment, the side arm 32 is formed of three-plate arm 34, 36, 38, but a side arm (32) may be formed of four-plate arm, such as a double reach arm, for example.

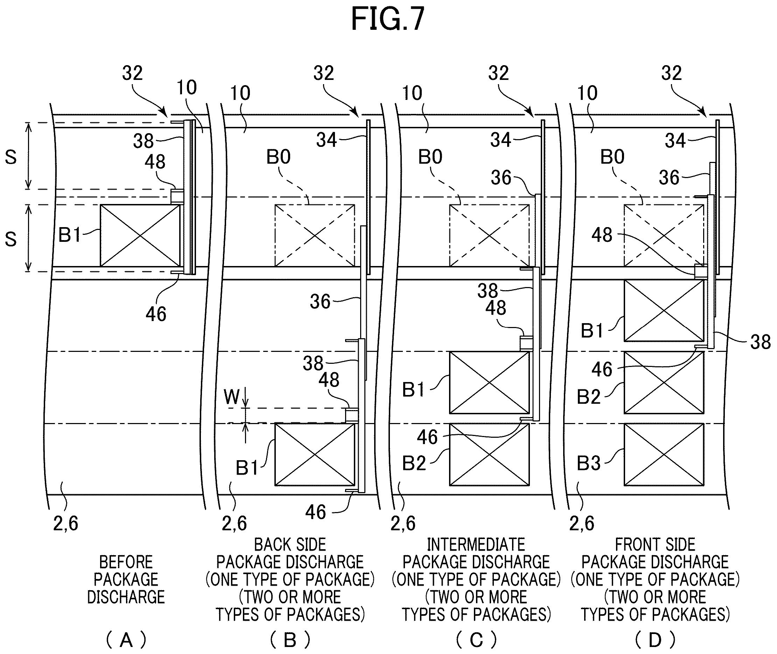

In this way, the side arm 32 having the base arm 34, the middle arm 36, and the top arm 38 can advance to the racks 2 (shelves 6) disposed on both sides of the traveling path 10 for the carriage 4 by the aforementioned drive mechanism (40, 42, 44 and the like), and a tip thereof advances to a rear end position of a package that is transferred to a backmost side in a depth direction of the rack 2. For example, in Figure 5 to Figure 7 described later, a tip of the top arm 38 can advance to a rear end position of the package that is transferred on the backmost side in the depth direction of the rack 2 (in particular, see positions of a package B1 and the top arm 38 shown in Figure 7 (B)). In the top arm 38 located at the rear end position like this, an end hook 46 at the tip in a protruded state can engage with a rear end of the package B1, and can take (lade) the package B1 onto the carriage 4.

Next, the top arm 38 includes end hooks 46 respectively at front and rear ends thereof. These end hooks 46 are configured to be rotatable between retraction positions (positions shown in Figure 3) where they are accommodated in the top arm 38, and protrusion positions where they are rotated approximately 90° from the retraction position and protrude between the pair of top arms 38. These end hooks 46 engage with a front end or a rear end of a package and take in or send out the package in the protrusion position (protruded state).

Furthermore, the top arm 38 includes a central hook 48 at an intermediate position in the front-rear direction thereof. The central hook 48 is also configured to be rotatable between a retraction position (position shown in Figure 3) where it is accommodated in the top arm 38, and a protrusion position where it protrudes between the pair of top arms 38 similarly to the aforementioned end hooks 46, and engages with a front end or a rear end of a package and takes in or sends out the package in the protrusion position (protruded state) thereof.

The central hook 48 is formed as an integral hook by coupling two rod-shaped members 48a formed in a similar shape to that of the end hook 46 with a single plate-shaped member 48b. As is obvious from Figure 3, a thickness in the front-rear direction of the central hook 48 that is formed in this manner (width in the depth direction of the rack 2, which is described later) is sufficiently larger than a thickness in the front-rear direction of the end hook 46 (width in the depth direction of the rack 2).

Though described in detail later, the thickness in the front-rear direction of the center hook 48 (width in the depth direction) is set to such a dimension that a small package can be transferred to the placement position on the backmost side of the rack 2 by only the central hook 48 when three small packages are stored in the depth direction of each of the racks 2.

Next, in the carriage 4, a motor (not illustrated) that moves the base arm 34 in the left-right direction is incorporated, so as to narrow or widen a distance from each other of the entire pair of side arms 32. That is to say, when a package having a predetermined package width is transferred, the space between the respective top arms 38 is narrowed to a distance that allows any of the hooks 46 and 48 to engage with front and rear ends of the package by this motor. In this case, the top arm 38 is brought close to a position where it keeps a predetermined small clearance from the package, or clamps the package to such an extent that excessive pressure is not applied to the package.

Furthermore, the top arm 38 includes a hook opening/closing motor 54 (see Figure 3) that rotates the end hooks 46 and the central hook 48.

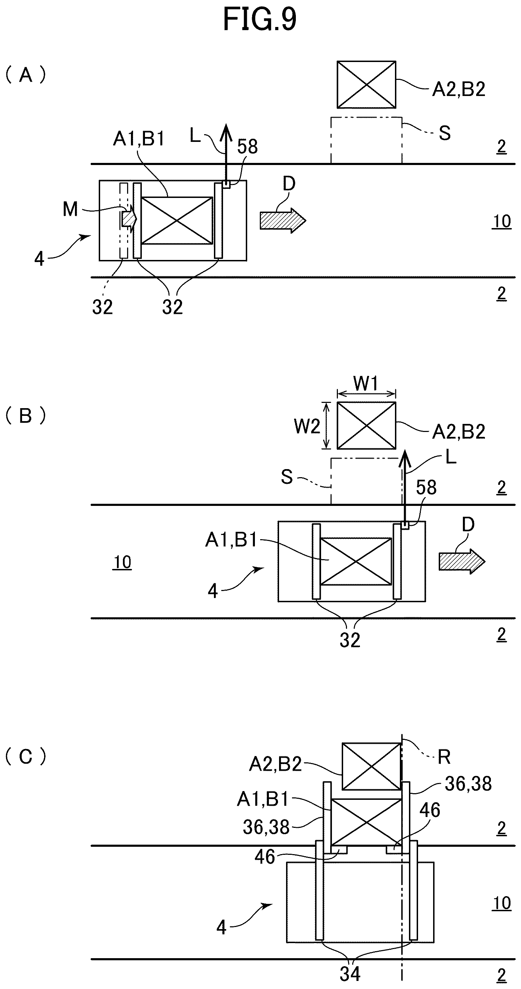

Here, in the present description, the "package width" of the package is a width of the package in the left-right direction (X-direction), and means a width of the package in a traveling direction of the carriage 4 (for example, a width indicated by reference sign W1 in Figure 9 (B) described later).

On the other hand, the "width in the depth direction" of the package is a width of the package in the front-rear direction (Y-direction), and means a width of the package in the depth direction of the rack 2 (for example, a width indicated by reference sign W2 in Figure 9 (B) described later).

Next, as shown in Figure 4, the transfer device 12 has a controller 50 for controlling the operations of the arms 34, 36, and 38, and the hooks 46 and 48 described above. The controller 50 controls the arm extending/retreating motor 52 that rotates the spline shaft 40 described above to extend and contract the side arm 32. Furthermore, the controller 50 controls a hook opening/closing motor 54 that causes the respective end hooks 46 to open and close and causes the central hook 48 to open and close. Furthermore, the controller 50 controls an arm opening/closing motor 56 for adjusting the space between the side arms 32.

Furthermore, a photoelectric sensor 58 (see Figure 9) described later and provided at a side surface of the carriage 4 (side surface on a rack 2 side) is connected to the controller 50, and a detection signal of a package that is stored in the rack 2, which is transmitted from the photoelectric sensor 58 is inputted to the controller 50.

Furthermore, in the automated warehouse 1 of the present embodiment, a detection signal of a package from the photoelectric sensor 58 is also transmitted from the controller 50 mounted on the transfer device 12 to the controller 22 for controlling the carriage 4 and the like by wireless communication or wired communication, though not illustrated. Thereby, the controller 22 is configured to control the operation of the carriage 4 based on the detection signal of the package from the photoelectric sensor 58.

Next, preconditions of the automated warehouse 1 of the present embodiment will be described.

First, in the automated warehouse 1 shown in Figure 1 to Figure 3 of the present embodiment, a ratio of the width in the front-rear direction (Y-direction) of the carriage 4, that is, the width in the front-rear direction of the region where the package can be placed between the pair of side arms 32, and the width in the front-rear direction (depth direction) of the rack 2 (shelf 6) on one side is configured to be a ratio of 4:6.

Furthermore, depending on the customer, the automated warehouse 1 may be used so as to store packages with only one kind of package width (width in the carriage traveling direction) in the rack 2, or the automated warehouse 1 may be used so as to store packages with two kinds or more package widths in the rack 2, and the automated warehouse 1 of the present embodiment described below is designed to be able to store two types or more of packages with different package widths (widths in the traveling direction of the carriage 4) in the rack 2.

Furthermore, the automated warehouse 1 of the present embodiment is designed assuming a case where the width in the depth direction (hereinafter, referred to as a "depth width") of the package is relatively large, and a maximum of two packages can be stored in the depth direction of each rack 2, and a case where the depth width of the package is relatively small, and a maximum of three packages can be stored in the depth direction of each rack 2. Hereinafter, a package in the former case will be referred to as a "large package", and a package in the latter case will be referred to as a "small package". In the present embodiment, a ratio of a width of such a large package and a width of a small package is 3:2.

In the present embodiment, a ratio of the width in the front-rear direction of the carriage 4, the width in the depth direction of the rack 2 (shelf 6), the width in the depth direction of the large package, and the width in the depth direction of the small package is 4:6:3:2.

Note that in the automated warehouse 1 of the present embodiment, large packages with the depth widths in a numeric value range that exceeds 400 mm and is 600 mm or less are applied, and small packages with the depth widths in a numeric value range of 200 mm or more and 400 mm or less are applied. The aforementioned ratio "4:6:3:2" is in the case where the width in the depth direction of a large package is 600 mm and the width in the depth direction of a small package is 400 mm.

Here, when storing packages in various shapes such as cardboard boxes, for example, these numeric value ranges are used to distinguish the respective packages in various shapes into the "large package" and the "small package", and then the packages are transferred to the rack 2 as described below.

Though not illustrated below, it is also possible to store one extra-large package, which is larger than the aforementioned large package, in the rack 2.

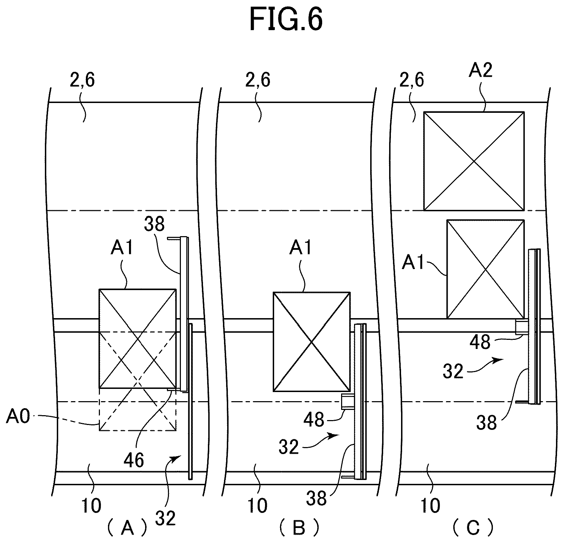

Next, based on Figure 5 to Figure 7, main patterns of transferring a package to the rack 2 by the transfer device 12 of the present embodiment will be described. Figure 5 is a schematic view showing a transfer pattern by the transfer device of the present embodiment, and is a view showing a rack in which placement positions of two large packages are defined in the depth direction, and a shuttle passage, Figure 6 is a schematic view showing an operation pattern of the transfer device when transferring a large package to the placement position on a front side, in the rack in which packages having two kinds or more package widths are stored and the placement positions of two large packages are defined in the depth direction, and Figure 7 is a schematic view showing a transfer pattern according to the transfer device of the present embodiment, and is a view showing a rack in which placement positions of three small packages are defined in the depth direction and a shuttle passage. Note that Figure 5 to Figure 7 illustrates only one of the side arms 32 for simplification.

The operations of the transfer patterns described below are controlled by the aforementioned controller 50 (see Figure 4).

First, based on Figure 5, an example of a transfer pattern in the case of the "large package" in which a maximum of two packages can be transferred in the depth direction of the rack 2 on one side will be described.

As shown in Figure 5 (A), a large package A1 before package discharge is placed on the carriage 4 (not illustrated). A pattern of transferring the large package A1 located at this position to the placement position on the front side of the rack 2 is shown in Figure 5 (B) and Figure 5 (C).

First, Figure 5 (B) is an example of a case of storing packages with two kinds or more package widths described above in the automated warehouse 1, and the large package A1 is transferred by using the central hook 48. In the case of this example, there are two or more kinds of package widths, and therefore, when a package width of a large package A2 stored on the back side is larger than a package width of the large package A1 to be transferred on the front side, for example, the side arm 32 is prevented from extending to the back side and abutting on/interfering with the large package A2.

Note that in the automated warehouse 1 of the present embodiment, when transferring packages with two or more kinds of package widths to the placement positions on the front side of the rack 2, unlike the transfer pattern using the central hook 48, it is possible to store packages by only the rear end hook 46 without change of the hook when the package width of the package stored on the back side is smaller than the package width of the package to be stored on the front side, or when the package width of the package stored on the back side and the package width of the package to be stored on the front side are the same as shown Figure 9 described later, for example.

On the other hand, when packages with one kind of package width are stored in the automated warehouse 1, as shown in Figure 5 (C), a package width of a package on the back side is the same as a package width of a package placed on the front side, and the side arm 32 does not interfere with the large package A2 on the back side even when the side arm 32 extends to the back side, so that the large package A1 is transferred by using the end hook 46 on a traveling path 10 side.

Furthermore, as shown in Figure 5 (D), when the large package A1 is transferred to the transfer position on the back side of the rack 2, the large package A1 is transferred by using the central hook 48 whether there are one kind of package width or two or more kinds of package widths.

Next, based on Figure 6, the extension/contraction operation of the side arm 32 and opening/closing operation of the end hook 46 and the central hook 48 when transferring the large package A1 to the placement position on the front side of the rack 2, in the case of storing the packages with two or more kinds of package widths in the automated warehouse 1 will be described. In the transfer pattern shown in Figure 6, when the package width of the large package A2 stored on the back side is larger than the package width of the large package A1 to be transferred onto the front side, change of the hook (change of hold of the package) from the end hook 46 to the central hook 48 is performed.

First, as shown in Figure 6 (A), the end hook 46 on a traveling path 10 side is brought to the protruding position, and the large package A1 on the carriage 4 is moved to a temporary placement position by the end hook 46. The "temporary placement position" corresponds to a position "after pushing out the package by a predetermined distance with the rear end hook" (see claims 1 and 5, paragraphs 0006 and 0011). Further, the "temporary placement position" is a position at which a rear end edge (end edge on the traveling path 10 side) of the package A1 that has been moved to the temporary placement position is on the back side with respect to a front end edge (end edge on the rack 2 side) of the central hook 48 when the side arm 32 is returned to an origin position (intermediate position in a width direction of the traveling path 10, shown by a long dashed short dashed line in Figures 6 (A) to (C)). In a state shown in Figure 6 (A), the central hook 48 is brought to the retraction position so as not to interfere with the large package A1. Hereinafter, in the case of the retraction position like this, illustration of the hook will be omitted. Note that in Figure 6 (A), reference sign A0 denotes a position of the large package A1 on the carriage 4 before transfer.

Next, as shown in Figure 6 (B), the side arm 32 is returned to a position where the central hook 48 can engage with the large package A1, and the central hook 48 which is at the retraction position is brought to the protruding position.

Next, as shown in Figure 6 (C), the side arm 32 is extended to the rack 2 side, and the large package A1 is transferred to the placement position on the front side of the rack 2 by the central hook 48 at the protruding position. Note that reference sign A2 denotes a large package that is already stored on the back side.

Note that when packages with one kind of package width are stored in the automated warehouse 1, the end hook 46 on the traveling path 10 side is brought to the protruding position first, while the central hook 48 and the end hook 46 on the back side are brought to the retraction position, though not illustrated. Then, the side arm 32 is extended to the rack 2 side, and the large package A1 is stored at the storage position on the front side of the rack 2 by the end hook 46. Note that in this case, the number of kinds of the package width is one, and the package width of the package on the back side is the same as the package width of the package placed on the front side, so that even when the side arm 32 extends to the placement position of the large package A2 on the back side, the side arm 32 does not interfere with the large package A2 on the back side. In this example, hook change to the central hook 48 is not performed.

Furthermore, when packages with one or more kind of package widths are stored on the back side of the rack 2, first of all, the end hook 46 on the traveling path 10 side is brought to the protruding position, and the central hook 48 is brought to the retraction position, and the large package A1 at the initial position A0 on the carriage 4 is moved to the temporary placement position, though not illustrated. Next, the side arm 32 is returned to the position where the central hook 48 can engage with the large package A1, and the central hook 48 at the retraction position is brought to the protruding position. Next, the side arm 32 is extended to the rack 2 side, and the large package A1 is transferred to the placement position on the back side of the rack 2 by the central hook 48 at the protruding position. In this example, hook change is performed from the end hook 46 to the central hook 48.

Next, based on Figure 7, an example of the transfer pattern in the case of "small package" in which a maximum of three packages are stored in the depth direction of the rack 2 will be described.

First, as shown in Figure 7 (A), a small package B1 before being discharged is placed on the carriage 4 (not illustrated).

Here, in the present embodiment, as shown in Figure 7 (A), the central hook 48 is provided so that predetermined spaces S are formed from the respective end hooks 46.

Furthermore, the central hook 48 has a larger width than the respective end hooks 46 as described above. As shown in Figure 7 (B), in the present embodiment, a width W in a depth direction of the central hook 48 is set to a width that makes it possible to transfer the "small package" to the placement position on a backmost side of the rack 2 by only the central hook 48.

Furthermore, the predetermined space S between the end hook 46 and the central hook 48 is set to a space equivalent to a depth width of one small package, whereby the small package is accommodated between the end hook 46 at the protruding position and the central hook 48 at the protruding position.

Here, in the present embodiment, the aforementioned "depth width of one small package" means a largest width of 400 mm in a range of the depth width of the small package described above. Note that in the present embodiment, the predetermined space S is set to a space of 420 mm so that a clearance of +20 mm can be obtained between the respective hooks 46 and 48, and the small package. Note that a clearance amount like this is properly set according to the specifications of the automated warehouse 1.

In the present embodiment, by the configurations of the end hooks 46 and the central hook 48 as above, it is possible to transfer the small package B1 located at the position shown in Figure 7 (A) to the placement position on the back side of the rack 2 (Figure 7 (B)), the intermediate placement position (Figure 7 (C)), and the placement position on the front side (Figure 7 (D)) by only the central hook 48 without stopping extension and contraction of the side arm 32. In the example shown in Figure 6, hook change to the central hook 48 is not performed.

Here, as a modification, the central hook 48 may have a width approximately the same as the width of each of the end hooks 46, and one central hook 48 may be provided at an intermediate position equidistant from the two end hooks 46. In this case, a small package may be transferred by changing hold of the small package from the end hook 46 to the central hook 48 as in the hook change pattern shown in Figure 6, for example.

Furthermore, as a modification, between the end hooks 46 at both the ends, two intermediate hooks 48 having an approximately same width as the width of each of the end hook 46 may be provided with a predetermined distance therebetween. In this case, the small package may be transferred by changing the hold of the small package from the end hook 46 to either one of the central hooks 48, as in the hook changing pattern shown in Figure 6, for example.

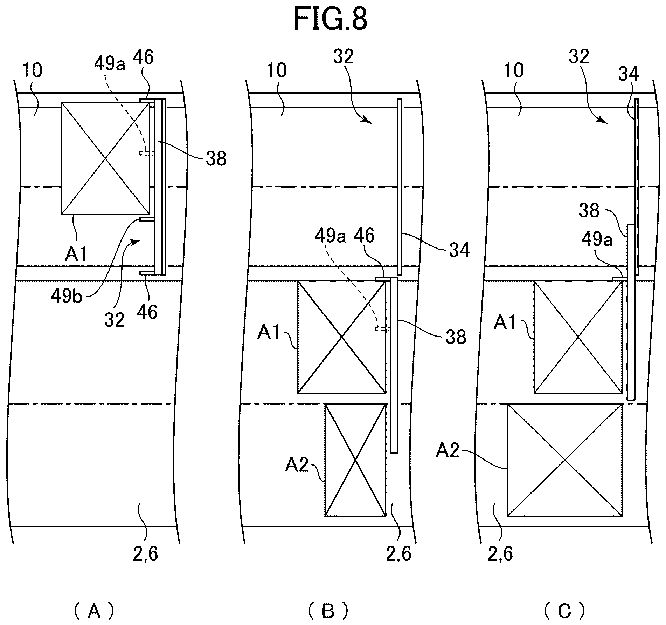

Here, as shown in Figure 8, a modification in a case of storing the packages with two or more kinds of package widths on the front side of the rack 2 in the one in which two intermediate hooks 49a and 49b each having an approximately same width as the width of each of the end hooks 46 are provided with a predetermined distance therebetween, between the end hooks 46 at both ends.

In the present example, as shown in Figure 8 (A), the large package A1 is laden on a side apart from the rack 2 on which it is to be transferred, on the carriage 4 (not illustrated). Patterns of transferring the large package A1 that is at this position to the placement position on the front side of the rack 2 are shown in Figure 8 (B) and Figure 8 (C). Note that reference sign A2 denotes a large package that is already stored on the back side.

First, Figure 8 (B) is a view showing a transfer pattern in a case where a package width of the large package A2 stored on the back side is smaller than a package width of the large package A1 to be transferred onto the front side. In an example shown in Figure 8 (B), the package is stored by only the rear end hook 46 on the front side, without changing the hook as described above. This also applies to the case where the package width of the package on the back side is the same as the package width of the package to be placed on the front side, and even when the side arm 32 is extended to the placement position of the large package A2 on the back side, without changing the hook, the side arm 32 does not interfere with the large package A2 on the back side.

On the other hand, Figure 8 (C) shows a transfer pattern in a case where the package width of the large package A2 stored on the back side is larger than the package width of the large package A1 to be transferred onto the front side. In the example shown in Figure 8 (C), the package is transferred by performing hook change as described above so that the side arm 32 does not extend to the back side and does not abut on/interfere with the large package A2.

In more detail, though operation halfway through transfer is not illustrated, the end hook 46 on the front side is brought to the protruding position, and the large package A1 on the carriage 4 is moved to a temporary placement position by this end hook 46. In this state, the intermediate hook 49a on the front side is brought to the retraction position so as not to interfere with the large package A1. Next, the side arm 32 is returned to the position where the intermediate hook 49a can engage with the large package A1, and the intermediate hook 49a that is at the retraction position is brought to the protruding position. Finally, as shown in Figure 8 (C), the side arm 32 is extended to the rack 2 side, and the large package A1 is transferred to the placement position on the front side of the rack 2 by the intermediate hook 49a at the protruding position.

Note that the modification shown in Figure 8 is also applicable to a case in which a small package (B1) not illustrated is laden on a side away from the rack 2 on which the small package is to be transferred, on the carriage 4.

In the present embodiment and the aforementioned modification, describing with an example of small packages, for example, when carrying out the change operation as described above, when package widths of the small packages B2 and B3 that are stored on the back side are larger than a package width of the small package B1 to be transferred onto the front side, the side arm 32 can be prevented from extending to the back side and abutting on/interfering with the small packages B2 and B3. For example, as a result, when storing the small package B1 on the front side indicated by the small package B1, the side arm 32 does not abut on/interfere with the small package B2 already stored on the back side thereof, and when storing the small package B2 at the intermediate position indicated by the small package B2, the side arm 32 does not abut on/interfere with the small package B3 already stored on the back side thereof (see Figure 7).

On the other hand, in the present embodiment, as shown in Figure 9 described later, it is possible to store a package by only the rear end hook 46 without changing the hook, when the package width of the package stored on the back side is smaller than the package width of the package to be stored on the front side, or when the package width of the package stored on the back side is the same as the package width of the package to be stored on the front side.

Note that when the small package placed on the loading placement region 26, 27 described above (see Figure 2) is laden on the carriage 4, the extension/contraction amount of the side arm 32 is adjusted so that the small package is laden at a predetermined holding position in the front-rear direction on the carriage 4. The predetermined holding position is a position at which the small package can be pushed toward the rack 2 on the side where the small package is to be stored by the central hook 48 at the time of transfer of the small package held on the carriage 4 to the rack 2.

Next, based on Figure 9, operations of the loading/unloading carriage and the transfer device thereof when transferring a package to the placement position (storage position) on the front side of the rack 2 of the automated warehouse 1 according to the present embodiment will be described. Figure 9 is a schematic view for explaining the operations of the loading/unloading carriage and the transfer device thereof when transferring a package to the storage position on the front side of the rack of the automated warehouse according to the present embodiment, Figure 9 (A) and Figure 9 (B) show movement of the loading/unloading carriage that measures a package width of a package on the back side of the rack, Figure 9 (C) shows a state in which the loading/unloading carriage arrives at the storage position of the rack, and the transfer device performs preparation operation of transfer of the package, and Figure 9 (D) is a view showing a state in which the transfer device transfers the package to the storage position on the front side.

First, a concept of the "storage position (placement position) on the front side" of the rack will be described.

In the present embodiment, the "storage position (placement position) on the front side" of the rack 2 is a storage position for a package that is a vacant space on the front side from a package that is already stored on the rack 2, when a package placed on the loading placement region 26, 27 (see Figure 2) is laden on the carriage 4, the carriage 4 is caused to travel on the traveling path 10 to discharge the package by the transfer device 12, as described above.

For example, in the case of the large package A described above, in the example shown in Figure 5 (D) described above, it is the placement position when storing a package on the front side from the placement position on the back side where the package A1 is already stored. As described in Figure 5 (D), no package is stored at the placement position on the front side, and the package is stored in a vacant space like this.

Furthermore, for example, in the case of the small package B described above, in the example shown in Figure 7 (B) described above, it is the storage position when storing the package at the "intermediate position" or the "frontmost position" on the front side from the placement position on the backmost side where the package B1 is already stored. In the example shown in Figure 7 (B), it is the storage position that is a vacant space where no package is stored in two locations (intermediate position or the frontmost position) on the front side from the backmost position. Furthermore, in the example shown in Figure 7 (C), it is the storage position on "the frontmost side" that is a vacant place on the front side from the placement position (intermediate position) on the back side where the package B1 is already stored.

Next, detection means of a "package width" for package (A, B) on the back side that is stored on the rack 2 will be described.

As mainly shown in Figure 9 (A) and Figure 9 (B), the photoelectric sensors (scanning sensor) 58 that can scan a package stored in the rack 2 by travel of the carriage 4 and detect the package width of the package are respectively provided on both side surfaces (side surfaces on the rack 2 side) of the carriage 4. Note that in Figure 9, only one of the photoelectric sensors 58 is illustrated for simplification.

The photoelectric sensor 58 detects presence or absence itself of the package by emitting laser toward the side of the rack 2 from the side of the carriage 4, that is, emitting laser in a perpendicular direction to the traveling direction of the carriage 4, and detecting reflected light from the package. Detection of a package like this is performed by the controller 50 (see Figure 4) or the controller 22 (see Figure 1) described above.

Here, a rotary encoder not illustrated is incorporated in a wheel (not illustrated) of the carriage 4, and based on an output signal of the encoder, the controller 50 or the controller 22 calculates a travel distance of the carriage 4.

Accordingly, the controllers 50 and 22 can calculate the package widths of the packages A and B by calculating the travel distances of the carriage 4 while the packages A and B are detected by the photoelectric sensor 58.

Note that in order to calculate the travel distance, a calculation value of a laser distance sensor (not illustrated) disposed on the carriage 4 may be used. The laser distance sensor is configured of, for example, a laser irradiation device provided on the carriage 4, and a reflection device provided at the origin position of the automated warehouse 1, and calculates the travel distance of the carriage 4 from the origin position of the automated warehouse 1 by reflected light in the reflection device of the emitted laser light.

Next, detection means of the "package width" of the package (A, B) that is placed on the carriage 4 and is to be stored at the "storage position on the front side" will be described.

As described above, the package A, B is laden on the carriage 4 from the loading placement region 26, 27 (see Figure 2). In this case, as described above, the package width of the package A, B in the loading placement region 26, 27 that is to be stored at the "storage position on the front side" from now is also calculated based on the photoelectric sensor 58 and the travel distance of the carriage 4. In more detail, the package width can be detected based on the travel distances by which the carriage 4 travels to the loading placement region 26, 27 to take the package A, B, and the detection result of the package in the loading placement region 26, 27 by the photoelectric sensor 58.

Note that as a modification, a laser distance meter (not illustrated) that can directly measure the package width of the package A, B may be provided in the loading placement region 26, 27, and the package width of the package A, B to be stored at the "storage position on the front side" may be detected.

Next, in the present embodiment, the package width of the package (denoted by A1 and B1) to be stored on the front side, and the package width of the package (denoted by A2 and B2) that is already stored on the back side are compared, and a method for storing the package A1, B1 into the rack 2 is changed.

That is to say, when the package width of the package A1, B1 to be stored on the front side is smaller than the package width of the package A2, B2 on the back side, hook change from the end hook 46 to the central hook 48 is performed as described above by mainly using Figure 6 in order to prevent the side arm 32 from interfering with the package A2, B2 on the back side, when discharging the package into the rack 2.

On the other hand, when the package width of the package A2, B2 on the back side is smaller than the package width of the package A1, B1 to be stored on the front side, or when the package width of the package A2, B2 on the back side is the same as the package width of the package A1, B1 to be stored on the front side, the aforementioned hook change operation (Figure 6 and the like) is not performed, and the package A1, B1 is stored at the storage positions on the front side by only the end hook 46 (see Figure 9 (D)).

Hereinafter, based on Figure 9, examples of operations of the loading/unloading carriage and the transfer device thereof when transferring the package A1, B1 to the storage position on the front side of the rack 2 will be described.

That is to say, first of all, as shown in Figure 9 (A), the carriage 4 on which the package A1, B1 to be discharged is placed from now moves in a moving direction denoted by reference sign D toward a package discharge destination. During this movement, the package A2, B2 stored in the rack 2 is scanned by laser L emitted from the photoelectric sensor 58. Note that in Figure 9, the storage position on the front side where the package A1, B1 is to be stored, and which is determined by the controller 22 (see Figure 1) is a region surrounded by a long dashed double-short dashed line denoted by reference sign S.

Here, when the package A1, B1 is laden on the carriage 4 from the conveyor of the loading placement region 26, 27, one of the pair of side arms 32 is slid and moved in a direction to sandwich the package A1, B1 (indicated by an arrow M), as shown in Figure 9 (A), and, as described above, a space between the side arms 32 is narrowed to such a distance that any of the hooks 46 and 48 can engage with the front and rear ends of the package. At this time, the side arm 32 to be slid and moved is the side arm 32 on an opposite side from a side of a reference position R (see Figure 9 (C)) that also serves as a reference for stopping the carriage 4, and thereby, the package A1, B1 on the carriage 4 can be adjusted to the reference position R.

Next, as shown in Figure 9 (B), the carriage 4 arrives at a destination position where it discharges the package, and the package width W1 of the package A2, B2 on the back side of the rack 2 is detected. In the present embodiment, the destination position is determined by the controller 22 based on a predetermined reference storage position (indicated by a long dashed double-short dashed line R in Figure 9 (C)).

Note that at this time, it is also possible to cause the carriage 4 to travel until a time point when the detection of the package width W1 of the package A2, B2 is completed, and to stop the carriage 4 at a time point when detection is completed, in consideration of a possibility that the package A2, B2 on the back side of the rack 2 is deviated in the package width direction from the reference storage position R due to various factors including a time lapse. As a result, the package width W1 of the package A2, B2, and a deviation amount from the reference storage position R can be detected at the same time. In this case, the controller 50 or the controller 22 determines that the detected package width W1 includes the deviation amount, and calculates a value of the deviation amount, based on information of the reference storage position R.

When the deviation amount is detected in this manner, if the deviation amount of the packages A2, B2 on the back side from the reference storage position R exceeds a predetermined allowable deviation amount set in advance (deviation amount set in advance with which the side arm 32 is highly likely to interfere with the package A2, B2 on the back side), for example, it is possible to determine to perform a hook change operation to avoid the possibility of the side arm 32 interfering with the package A2, B2 on the back side.

On the other hand, when the controller 50, 22 determines that the package width W1 includes the deviation amount, the controller 50, 22 may execute a correction operation to return the position of the package A2, B2 on the back side to the reference position.

In this case, before the package A1, B1 on the carriage 4 is stored in the rack 2, the middle arm 36 and the top arm 38 are extended to a side of the package A2, B2 on the back side in a state in which all the hooks 46 and 48 are returned to the retraction position, the carriage 4 is finely moved to travel so as to return the package A2, B2 on the back side to the position along the reference storage position R by the arms 36 and 38, and the deviation amount is corrected. By performing the correction operation like this, when the package A1, B1 is transferred to the storage position S on the front side, it is possible to place the package A1, B1 so that the side arm 32 does not interfere with the package A2, B2 on the back side, and the storage positions of all the packages A1, B1, A2, B2 on the back side and front side are along the reference storage position R.

The correction operation like this may be performed by moving the carriage 4 again after the carriage 4 is stopped along the reference storage position R, for example, or may be performed during travel of the carriage 4 for discharging the package A1, B1 on the front side (without stopping travel).

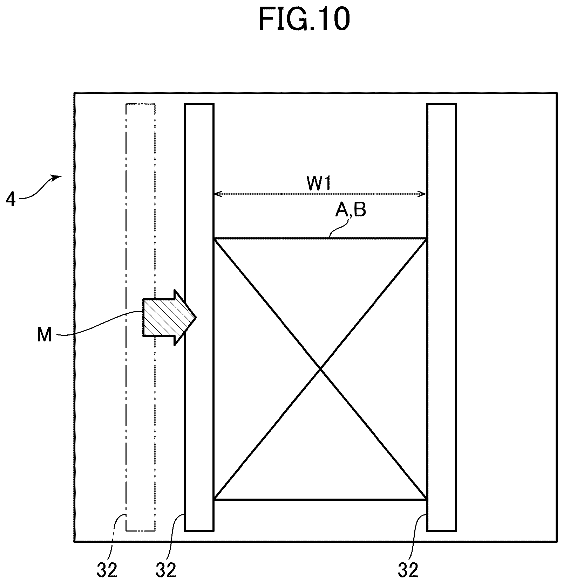

Next, as shown in Figure 9 (C), when the package width of the package A1, B1 to be stored on the front side is larger than the package width of the package A2, B2 on the back side, the hook change is not performed, and the package A1, B1 is stored in the rack 2 by only the end hook 46 on the rear end side. Here, the package width of the package A1, B1 to be stored on the front side can be detected, for example, by a laser distance meter (not illustrated) that is provided in the loading placement region 26, 27, and can directly measure the package width of the package A1, B1, a clamp or the like of the side arm 32 that will be described later by using Figure 10.

As s modification of detection of the package width of the package A2, B2 that is stored on the back side of the rack 2, a laser distance meter (not illustrated) that can directly measure the package width of the package A2, B2 is provided in the loading placement region 26, 27 first, the measured package width is memorized by the controller 50 or the controller 22, and the package A2, B2 is laden on the carriage 4. Thereafter, when completing storing of the package A2, B2 at the intended storage position on the back side, the memorized package width is associated with the storage position of the rack 2, and thereby the package width of the package A2, B2 stored on the back side of the rack 2 can also be specified.

Furthermore, based on Figure 10, a modification of the detection of the package width of package A, B that is stored on the rack 2 will be described. Figure 10 is a schematic view of a transfer device for explaining a detection operation of a package width, which is executed during conveyance of the package to be stored in the rack, according to the modification of the present embodiment.

As shown in Figure 10, the package A, B that is laden on the carriage 4 in the loading placement region 26, 27 may be clamped with a pair of side arms 32, and a package width W1 thereof may be measured, during conveyance by the carriage 4. In the example of Figure 10, as described above, one of the side arms 32 is slid and moved in a direction of a reference sign M to clamp the package (see Figure 9 (A)).

In this case, a rotary encoder not illustrated is incorporated into a motor (not illustrated) for sliding and moving the entire pair of side arms 32 described above, and the controller 50 or the controller 22 calculates the package width W1 based on an output signal of the encoder, positional data of the side arm 32, and the like. That is to say, in the present example, the encoder that slides and moves the side arms 32 plays a role of a sensor. Note that a linear position detection sensor that directly detects a slide amount of the side arm 32 may be used.

The controller 22 or the controller 50 memorizes the detection result of the detected package width of the package A, B when the package A, B is stored at the storage position on the back side by the transfer device 12.

Next, operational effects of the automated warehouses according to the embodiments and the modifications thereof of the present invention will be described.

First, the automated warehouse 1 according to the present embodiment and the modifications includes the rack 2 that is capable of storing a plurality of packages A1 to A2, B1 to B3 in the depth direction, the loading/unloading carriage 4 that travels along the rack and has the transfer device 12 that transfers a package to the rack, and the controllers 22 and 50 that control the loading/unloading carriage 4 and/or the transfer device 12, the transfer device 12 includes the arms 32, 34, 36, and 38 that advance and retreat with respect to the rack, the front end hook 46 provided at the front end of the arm, the rear end hook 46 provided at the rear end of the arm, and at least one of the intermediate hooks 48 and 49 that is provided at the intermediate position of the arm, and the controller 22 and/or the controller 50 are configured to, when the package A2, B2 is stored at the storage position on the back side, and the package A1, B1 is to be stored at the storage position S that is on the front side of the storage position on the back side, retreat the arm after pushing out the packages A1, B1 by the predetermined distance by the rear end hook 46, and further move the package to the storage positions on the front side by the intermediate hook 48, 49 to store the package A1, B1 at the storage position S on the front side in the case in which the package width W1 of the package A2, B2 at the storage positions on the back side is larger than the package width of the package A1, B1 to be transferred to the storage position on the front side, and transfer the package A1, B1 to the storage position S on the front side by the rear end hook 46 to store the package A1, B1 at the storage position S on the front side in the case in which the package width W1 of the package A2, B2 at the storage position on the back side is smaller than or the same as the package width of the package A1, B1 to be transferred to the storage position on the front side.

According to the present embodiment configured as above, in the case in which the package width W1 of the package A2, B2 that is stored on the back side is smaller than the package width of the package A1, B1 to be stored on the front side, the changing operation of the hooks 46, 48 and 49 can be omitted, and thereby the transfer time can be shortened. Accordingly, a plurality of kinds of packages with different package widths can be efficiently stored at the storage positions S on the front side of the rack 2.

Furthermore, in the present embodiment, the loading/unloading carriage 4 includes the photoelectric sensor (scanning sensor) 58 that scans and detects the package width W1 of the package A2, B2 that is stored in the rack 2 by movement of the loading/unloading carriage 4, and the controller 22 and/or the controller 50 are configured to calculate the package width W1 of the package A2, B2 at the storage position on the back side based on a moving distance while the scanning sensor 58 is detecting the package A2, B2 during movement at the time of the loading/unloading carriage 4 storing the package A1, B1.

According to the present embodiment configured as above, since the package width of the package is calculated while the loading/unloading carriage is moving to store the package, the actual package width and position of the package can be confirmed without needing extra time for measuring the package width,

Furthermore, in the modification of the present embodiment, the loading/unloading carriage 4 includes the encoder or the like (sensor) of the side arm 32 that detects the package width of the package A2, B2 that is placed on the transfer device 12 and being conveyed, and the controller 22 and/or the controller 50 are configured to memorize the detection result of the package width of the package A2, B2, which is detected by the encoder or the like of the side arm 32, when the package A2, B2 is stored at the storage position on the back side.

According to the present embodiment that is configured as above, based on the memorized package width of the package A2, B2 at the storage position on the back side, the memorized information can be used when storing the package A1, B1 at the storage position S on the front side, after that. Furthermore, measurement operation of the package widths during movement of the loading/unloading carriage 4 can be made unnecessary.

Furthermore, in the present embodiment and the modifications thereof, the controller 22 and/or the controller 50 is configured to detect the deviation amount in the package width direction from the predetermined position of the package A2, B2 that is stored at the storage position on the back side together with the package width W1 of the package A2, B2 at the storage position on the back side by the photoelectric sensor (scanning sensor) 58.

According to the present embodiment configured as above, it is possible to determine the necessity of the change operation by taking into account the positional deviation amount of the package in addition to the package width W1 of the package A2, B2 at the storage position on the back side. For example, when the deviation amount from the predetermined position (the reference storage position, the storage reference line) R of the package A2, B2 on the back side is equal to or larger than a specified amount, and the package A1, B1 cannot be stored properly at the storage position S on the front side, it is possible to determine to perform the change operation of the hooks 46, 48, and 49 in order to avoid the possibility of the side arm 32 interfering with the package A2, B2 on the back side.

Furthermore, in the present embodiment, the controller 22 and/or the controller 50 are configured to perform the hook change operation when the detected deviation amount in the package width direction from the predetermined position (reference storage position, the storage reference line) R of the package A2, B2 that is stored at the storage position on the back side exceeds the predetermined allowable deviation amount (the preset deviation amount at which it is assumed that the side arm 32 is highly likely to interfere with the package A2, B2 on the back side). The hook change operation is an operation that retreats the arm after pushing out the package A1, B1 by the predetermined distance by the rear end hook 46, and further transfers the package to the storage position on the front side by the intermediate hook 48, 49 to store the package A1, B1 at the storage position S on the front side.

According to the present embodiment configured as above, it is possible to avoid interference between the side arm 32 and the package A2, B2 on the back side having a large deviation amount, by the hook change operation.

### Reference Signs List

A1, A2 large package
B1 B2 small package
D moving direction of loading/unloading carriage
L laser light of photoelectric sensor
M moving direction of side arm
R package storage reference position (reference line)/carriage stop reference position
S storage position on front side
W1 package width of package
W2 width in depth direction of package
1 automated warehouse
2 rack
4 loading/unloading carriage
6 shelf
8 shelf stage
10 traveling path
12 transfer device
14, 16 station
22 controller
32 side arm
34 base arm
36 middle arm
38 top arm
46 end hook
48 central hook
50 controller
58 photoelectric sensor (scanning sensor)

## Claims

1. An automated warehouse comprising a rack capable of storing a plurality of packages in a depth direction, a loading/unloading carriage that travels along the rack and has a transfer device that transfers a package into the rack, and a controller, wherein
the transfer device comprises
an arm that advances and retreats with respect to the rack,
a front end hook provided at a front end of the arm,
a rear end hook provided at a rear end of the arm, and
at least one intermediate hook provided at an intermediate position of the arm,
the controller is configured to, when a package is stored at a storage position on a back side, and a package is to be stored at a storage position on a front side of the storage position on the back side,
retreat the arm after pushing out the package by a predetermined distance by the rear end hook, and further transfer the package to the storage position on the front side by the intermediate hook to store the package at the storage position on the front side, in a case in which a package width of the package at the storage position on the back side is larger than a package width of the package to be transferred to the storage position on the front side, and
transfer the package to the storage position on the front side by the rear end hook to store the package at the storage position on the front side in a case in which the package width of the package at the storage position on the back side is smaller than or same as the package width of the package to be transferred to the storage position on the front side.

2. The automated warehouse according to claim 1, wherein
the loading/unloading carriage comprises a scanning sensor that scans and detects a package width of a package stored in the rack by movement of the loading/unloading carriage, and
the controller is configured to calculate the package width of the package at the storage position on the back side based on a moving distance while the scanning sensor is detecting the package during movement at a time when the loading/unloading carriage stores the package.

3. The automated warehouse according to claim 1, wherein
the loading/unloading carriage comprises a sensor that detects a package width of a package that is placed on the transfer device and is being conveyed, and
the controller is configured to memorize a detection result of the package width detected by the sensor, of the package, when the package which is conveyed is stored at the storage position on the back side.

4. The automated warehouse according to claim 2, wherein the controller is configured to detect, by the scanning sensor, a deviation amount in a package width direction from a predetermined position, of the package stored at the storage position on the back side, together with the package width of the package at the storage position on the back side.

5. The automated warehouse according to claim 4, wherein the controller is configured to retreat the arm after pushing out the package by a predetermined distance by the rear end hook and further transfer the package to the storage position on the front side by the intermediate hook to store the package at the storage position on the front side, in a case in which the detected deviation amount in the package width direction from the predetermined position, of the package that is stored at the storage position on the back side exceeds a predetermined allowable deviation amount.
